# EUROPEAN PATENT APPLICATION

(11) **EP 4 520 528 A2**
(43) Date of publication of application: **12.03.2025**
(21) Application number: 25150895.8
(22) Date of filing: 31.03.2017
(51) Int. Cl.: B32B 29/08

(54) **SYSTEM AND METHOD FOR PRODUCING MULTI-LAYERED BOARD HAVING A CORRUGATED MEDIUM AND AN EMBOSSED MEDIUM**

(30) Priority: 01.04.2016 US 201615088999
(62) Divisional of application: 17776824.9
(71) Applicant: Packaging Acquisitions I, LLC, El Paso, TX 79901-1577 (US)
(72) Inventor: GREENFIELD, Giles, Renton, WA 98057 (US)
(74) Representative: FRKelly

(57) **Abstract**

A method of making a board product with improved structure, the method comprising:
embossing a first paper in a machine direction, the first paper having underlying fibers aligned in the machine direction and the embossing resulting in an embossed medium having linearly-embossed flutes induced in the machine direction;
corrugating a second paper in a cross direction, the corrugating resulting in a corrugated medium having flutes induced in the cross direction;
feeding the embossed medium, the corrugated medium, a first side facing, and a second side facing toward a single combiner; and
combining the embossed medium, the corrugated medium, the first side facing, and the second side facing in the single combiner.

## Description

### BACKGROUND

Modem paper-making techniques use paper machines at paper mills to produce rolls of paper that, in turn, can be used by board makers to produce board products (i.e., corrugated board). As a result, rolls of paper may be produced from machines that operate continuously. Modern paper machines typically produce paper from a number of substances including wood pulp that comprise wood fibers (although other fibers may also be used). These fibers tend to be elongated and suitable to be aligned next to one another. The fiber starts as a slurry that can be fed onto a moving screen from a head box of the paper machine. In modem paper machines, the fibers tend to align with each other and align with a direction in which the screen is moving. This alignment direction of underlying fibers is called the major direction of the paper and is in line with the machine direction. Thus, the major direction is often simply called the machine direction (MD) and the paper that is produced has an associated MD value.

When paper is used to make a board product, portions or layers of the board product may be corrugated. Traditional corrugating machines will corrugate the underlying paper product in the cross direction (CD) of the paper thereby failing to take advantage of the natural strength bias of the paper in the machine direction. Further, the greater natural strength qualities of paper in the machine direction are left unharnessed by cross corrugation techniques in board making solutions. As a result, companies that produce conventional board products remain entrenched in old production processes that limit the strength of the board product.

### SUMMARY OF THE INVENTION

The present invention provides a method of making a board product as claimed in claim 1 and a machine configured to produce a board product as claimed in claim 10. Preferred and optional features of the invention are described in the dependent claims.

### BRIEF DESCRIPTION OF THE DRAWINGS

Aspects and many of the attendant advantages of the claims will become more readily appreciated as the same become better understood by reference to the following detailed description, when taken in conjunction with the accompanying drawings, wherein:
**FIG. 1** is an isometric cutaway view of a corrugated medium that may be part of one or more board products according to one or more an embodiment of the subject matter disclosed herein.
**FIG. 2** is an isometric cutaway view of an embossed medium that may be part of one or more board products according to one or more embodiments of the subject matter disclosed herein.
**FIG. 3A****/B** are isometric cutaway views of a board product having at least one corrugated medium and at least one embossed medium according to an embodiment of the subject matter disclosed herein.
**FIG. 4** is a diagram of aspects of a machine configured to produce the board product of **FIG. 3A****/B** or **FIG. 5A****/B** according to an embodiment of the subject matter disclosed herein.
**FIG. 5A****/B** are isometric cutaway views of a board product having a corrugated medium and an embossed medium and having a facing disposed between these mediums according to an embodiment of the subject matter disclosed herein.

### DETAILED DESCRIPTION

The following discussion is presented to enable a person skilled in the art to make and use the subject matter disclosed herein. The general principles described herein may be applied to embodiments and applications other than those detailed above without departing from the spirit and scope of the present detailed description. The present disclosure is not intended to be limited to the embodiments shown, but is to be accorded the widest scope consistent with the principles and features disclosed or suggested herein.

By way of overview, the subject matter disclosed herein may be directed to a system and method for producing a board product made from paper products that have at least one corrugated medium (sometimes called corrugated fluting) and at least one embossed medium (sometimes called embossed fluting). The board product may further include one or more facings (sometimes called liners or walls) that are adhesively coupled to the corrugated medium, the embossed medium, or both. Generally speaking, a corrugated medium may be characterized as a paper product that exhibits flutes induced by a corrugating process such that the induced flutes are perpendicular (or at least not congruent) with the machine direction of the paper product. That is, the corrugated medium has flutes in the cross direction of the paper. An embossed medium may be characterized as a paper product that exhibits flutes induced by an embossing process such that the induced flutes are aligned with the machine direction of the paper product.

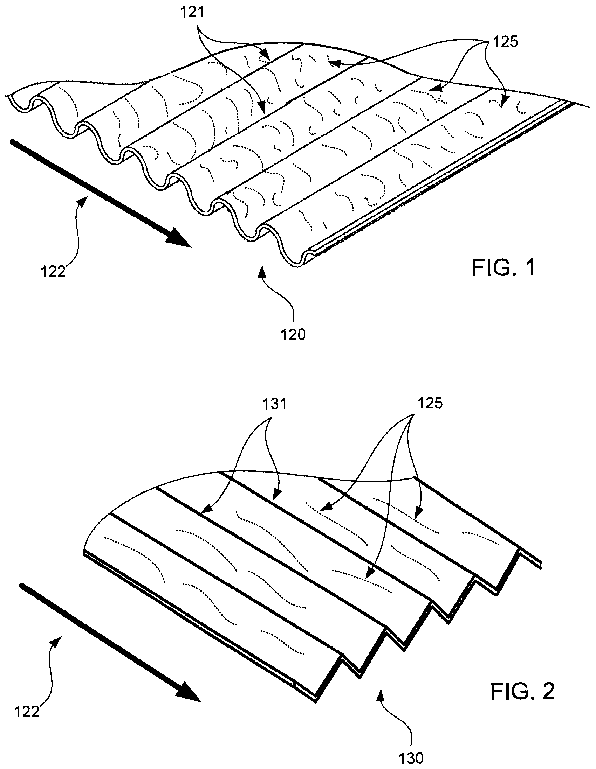

When a board product is produced such that a corrugated medium and an embossed medium are adhesively coupled and flanked by a facing on either outside surface, the resultant characteristics of the board product is superior to conventional board product that use only corrugated medium. This is because the embossed medium is produced using a linear embossing process that takes advantage of the natural strength of the machine direction of the paper product. Additional permutations of the underlying concept of having a cross-corrugated medium and a linearly embossed medium in the same board product are possible, including disposing a facing between the corrugated medium and the embossed medium and having facings on one or both outer walls of the board product. These advantages and additional aspects of various embodiments of the subject matter disclosed herein are discussed below with respect to **FIGs. 1-5****.**

Prior to discussing the various embodiments, a brief discussion about cross corrugating and linear embossing is presented. As has been briefly stated above, conventional board products include a conventionally produced corrugated medium, e.g., a cross-corrugated medium. A cross-corrugated medium has flutes formed perpendicular to most underlying fibers of the paper product. This results in flutes that are not aligned with the majority of underlying fibers and, therefore, do not take advantage of the natural strength of the MD value of the paper (when compared to the CD value). Such a failure to harness the MD value of the paper leads to loss of opportunity in the manufacturing of board products when specific board strength is to be realized. That is, it will necessarily take more paper (heavier paper, larger flutes, and the like) to realize the required board strength.

A linearly-embossed medium is different from a cross-corrugated medium in that the induced flutes are aligned with the MD value of the paper product. This results in flutes that are aligned with the majority of underlying fibers and, therefore, take full advantage of the natural strength of the MD value of the paper (when compared to the CD value). Harnessing the MD value of the paper leads to efficiencies in the manufacturing of board products when specific board strength is to be realized. That is, it will necessarily take less paper (lighter paper, smaller flutes, and the like) to realize the required board strength. Aspects of making, producing, and using linearly embossed mediums are discussed in greater detail in U.S. Patent Application No. 15/077,250 entitled "SYSTEM AND METHOD FOR INDUCING FLUTING IN A PAPER PRODUCT BY EMBOSSING WITH RESPECT TO MACHINE DIRECTION" and filed on March 22, 2016. Thus, the aspects of linearly-embossed mediums will not be discussed further for brevity as the discussion now turns to **FIGs. 1-5****.**

**FIG. 1** is an isometric cutaway view of a corrugated medium ***120*** that may be part of one or more board products according to one or more embodiments of the subject matter disclosed herein. This diagram shows an isometric view of a portion of a corrugated medium ***120*** that may be formed from a corrugating process as may be conventionally known. That is, flutes ***121*** are formed by passing the initial paper product through corrugating rolls in a cross-corrugation technique such that the flutes ***121*** are formed to be perpendicular (e.g., not congruent) with the majority of underlying fibers ***125*** of the paper product and are not congruent with the machine direction ***122.*** As has been briefly discussed above, a cross-corrugated medium ***120*** does not harness the natural strength of the paper product in the machine direction as the flutes ***121*** are formed in the cross direction of the paper {e.g., incongruent with the majority of the underlying fibers ***125***).

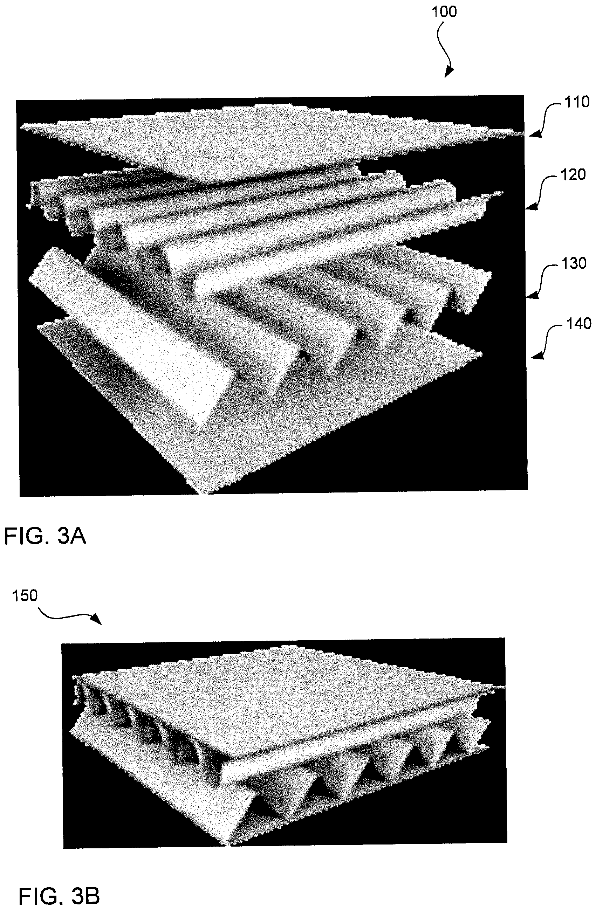

Notwithstanding its failure to harness the natural strength of the paper in the machine direction ***122,*** the cross-corrugated medium ***120*** of **FIG. 1** is relatively inexpensive to produce and is widely produced by readily available industrial corrugating machines. Such a corrugated medium ***120*** may be one component/layer of a board product as discussed below with respect to **FIG. 3A****/B.**

**FIG. 2** is an isometric cutaway view of an embossed medium ***130*** that may be part of one or more board products according to one or more embodiments of the subject matter disclosed herein. This diagram shows an isometric view of a portion of an embossed medium ***130*** that may be formed from an embossing process. That is, flutes ***131*** are formed from passing the initial paper product through embossing rolls to form flutes using a linear-embossing technique such that the flutes ***131*** are formed congruent with a majority of underlying fibers ***125*** of the paper. The flutes ***131*** are also formed congruent with the machine direction ***122.*** A linearly-embossed medium ***130*** harnesses the natural strength of the paper in the machine direction ***122*** as the flutes ***131*** are formed in the machine direction ***122*** of the paper (e.g., congruent with a majority the underlying fibers ***125***). Therefore, a linearly-embossed medium ***130*** does harness the natural strength of the paper in the machine direction ***122.*** Such an embossed medium ***130*** may be another component/layer of a board product as discussed below with respect to **FIG. 3A****/B**.

**FIG. 3A** is an isometric cutaway view of a board product ***100*** having at least one corrugated medium ***120*** and at least one embossed medium ***130*** according to an embodiment of the subject matter disclosed herein. In this embodiment, the board product includes four layers: a first facing ***110,*** a corrugated medium ***120,*** an embossed medium ***130,*** and a second facing ***140**.* As is shown, the first facing ***110*** may form a topside outer wall (although the top/bottom direction reference to alignment of the board product ***100*** is arbitrary) that is coupled to one side of the corrugated medium ***120**.* The coupling may be through an adhesive applied to the apex of each flute on the top-side of the corrugated medium ***120*** such that the facing ***110*** is glued to the corrugated medium ***120*** where adhesive is applied. In other embodiments, glue may be applied to the entirety of the facing ***110*** prior to being coupled to the corrugated medium ***120**.*

Likewise, a second facing **140** may form a bottom-side outer wall (again, the top/bottom direction reference is arbitrary) that is coupled to one side of the embossed medium **130.** The coupling may be through an adhesive applied to the apex of each flute on the bottom-side of the embossed medium **130** such that the facing **140** is glued to the embossed medium **140** where adhesive is applied. In other embodiments, glue may be applied to the entirety of the facing **140** prior to being coupled to the embossed medium **130.**

Further, the corrugated medium **120** and the embossed medium **130** may also be glued to each other using adhesive. Because the flutes of the corrugated medium **120** are aligned in the cross direction and the flutes of the embossed medium **130** are aligned in the machine direction, the contact points between these two mediums will be at the crossings of the apexes of the respective flutes. In this manner, the corrugated medium **120** and the embossed medium **130** are affixed with respect to one another because of the adhesive holding one medium directly to the other.

When all four layers are assembled and affixed, the resultant board product ***100*** is stronger than conventional board product because the linearly embossed medium ***130*** takes advantage of the superior MD value of the underlying paper product. As can also be seen in **FIG. 3B****,** the four layers, when assembled feature the embossed medium ***130*** having flutes that are perpendicular (or at least not congruent) with the flutes of the corrugated medium ***120*** This results in additional board strength because the flutes of the respective mediums are perpendicular with respect to each other (or at the least, not congruent). Other embodiments not shown may include any combination of mediums and facings such that at least one medium is a corrugated medium ***120*** and at least one medium is an embossed medium ***130**.*

In the embodiment shown in **FIG. 3A****/B,** the corrugated medium ***120*** is shown with a flute profile known as C-flute. The flute profile is a standardized set of parameters detailing various measurements of the flute, such as flute height, flute pitch, number of flutes per lineal foot, and the like. Other standardized flute profiles include A-flute, B-flute, E-flute, F-flute, and R-flute. Thus, in this embodiment, the corrugated medium ***120*** includes a sinusoidal C-flute pattern. Further, the embossed medium ***130*** is also shown with a C-flute profile, but, of course, the flutes are linear with respect to the machine direction of the underlying paper. The embossed medium ***130*** also has a different shape in that the flute profile is characterized by a triangular pattern. In other embodiments not shown, the embossed medium ***130*** may have a different flute profile than the corrugated medium ***120,*** such as E-flute profile.

In yet other embodiments (also not shown), the flutes of the corrugated medium ***120*** and the embossed medium ***130*** may be aligned with each other when assembled. The corrugated medium ***120*** will still have the corrugated flutes induced in the cross direction of the paper and the embossed medium ***130*** will still have flutes induced in the machine direction of the paper. But, one of the two mediums may be transferred 90 degrees during a board assembling process in an effort to align the flutes of the two mediums ***120*** and ***130*** while still taking advantage of a linearly embossed medium ***130*** that harnesses the MD value of paper.

In another embodiment not shown, a board product ***100*** may include four layers as shown in the board product of **FIG. 3A****/B,** but instead of an embossed medium ***130,*** the board product ***100*** may include a scored medium (not shown). A scored medium may exhibit a flute profile through a scoring process such that score lines, in effect, result in a fluted medium. Thus, in this embodiment, the board product ***100*** may include a first facing ***110**,* a corrugated medium ***120**,* a scored medium (not shown) and a second facing *140**.*** Further embodiments may include additional scoring on one or both facings ***110*** and ***140*** either in the machine direction or in the cross direction.

As has been discussed with respect to **FIG. 3A****/B,** the induced flutes of the embossed medium ***130*** are congruent with the machine direction ***122***. Thus, the underlying long fibers ***125* (****FIG. 2****)** of the paper remain aligned with the flute direction. Having the underlying long fibers ***125* (****FIG. 2****)** aligned with respective flutes results in an alignment of the flutes with the greater MD value of the paper (when compared to the CD value). Cross-corrugating techniques necessarily lead to having flutes aligned with the CD value of the paper. Differently, the linear embossing process takes advantage of the MD value of the paper by aligning the flutes in the machine direction. Therefore, the flute-inducing embossing process allows less total fiber to be used in achieving a specific strength of a resulting board product, such as board product ***100**.*

Such a board product having a linearly-embossed medium ***130*** further leads to efficiencies on several levels and succeeds in realigning the interests of paper makers and board/box makers. First, linear embossing allows the paper maker to disregard any need to carefully control the alignment (or rather non-alignment) of the pulp fibers when first poured onto a screen on a paper machine. Paper makers, in order to improve strength in the cross direction, may employ paper machines that include a head box that combats the natural alignment of underlying long fibers in the machine direction. With linear embossing, the need for improved strength in the cross direction is reduced or eliminated. Therefore, the paper-maker can focus on improving the speed of the paper machine.

Second, board makers can produce board products with less paper material. The linearly embossed layer ***130*** discussed herein lead to a fluted medium that requires less material for production. That is, in conventional corrugating machines, the paper needed for the fluted medium is greater than the paper needed for a facing portion (in linear terms). Thus, the efficiency gain is two-fold: less overall paper used in making corrugated board and greater strength I n the resultant board by aligning the MD value in both flutes and facings.

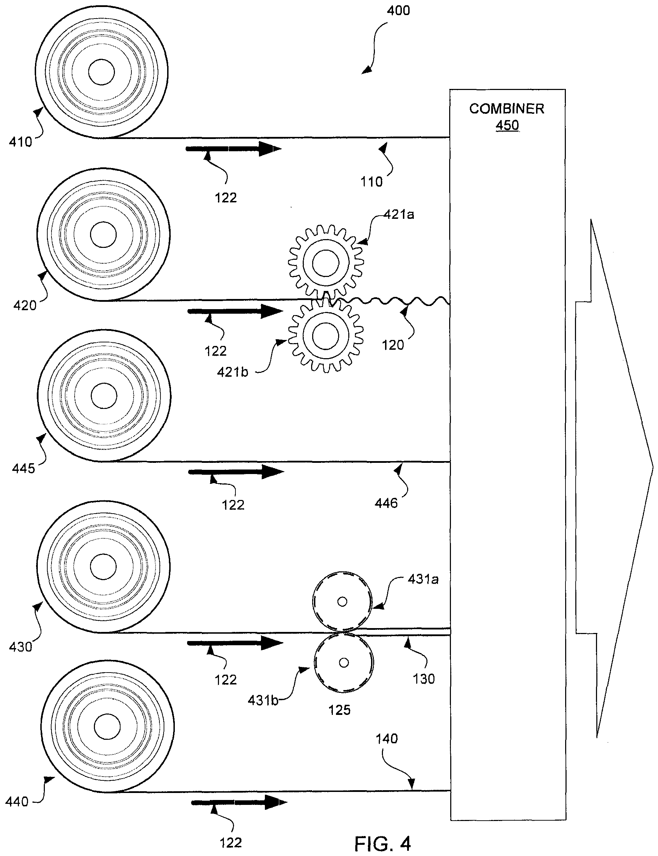

The embodiments as discussed with respect to **FIGs. 1-3** have a corrugated medium ***120*** that exhibits a sinusoidal shape of a flute. Further, the embossed medium ***130*** is shown as having a triangular flute profile. However, other embodiments may include different shapes for flutes of either medium including saw-tooth, trapezoidal, or any manner of a curvilinear shape. Additional aspects of the board product ***100*** of **FIGs. 1-3** are discussed next with respect to the machine of **FIG. 4****.**

**FIG. 4** is a diagram of aspects of a machine ***400*** configured to produce the board product ***100*** (or other board products) of **FIG. 1** according to an embodiment of the subject matter disclosed herein. In this embodiment, the machine includes five feed rolls ***410, 420, 430, 440,*** and ***445*** of paper that are used to produce a board product. These feed rolls include a first facing feed roll ***410,*** a corrugated medium feed roll ***420,*** an embossed medium feed roll ***430,*** a second facing feed roll ***440*** and a middle facing feed roll ***445***. Note that the paper that is wound on the corrugated medium feed roll ***420*** is prior to corrugating and the paper that is wound on the embossed medium feed roll ***430*** is prior to embossing. The weights and composition of the paper for each respective feed roll may be different and designed specifically for the respective purpose.

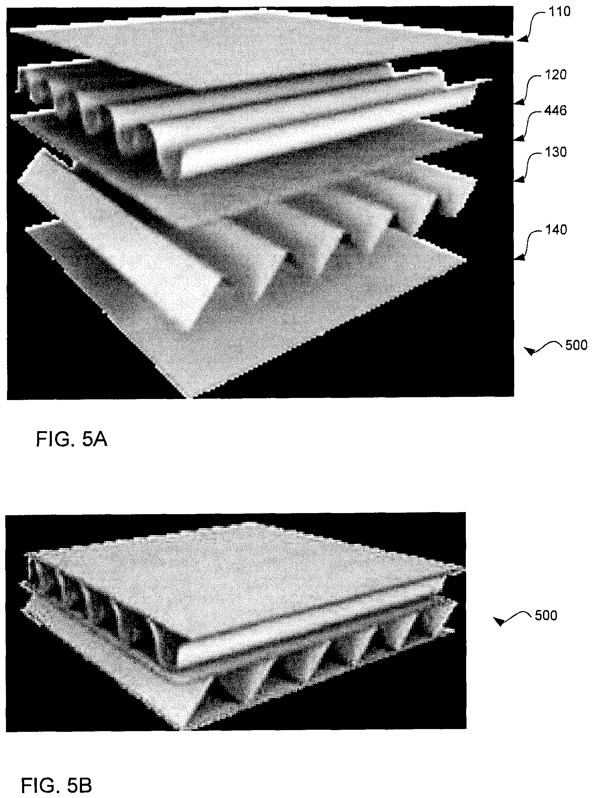

The paper from each roll may be unwound from each respective roll and fed toward a combiner ***450*** that is configured to combine the various layers of paper together to form a resultant board product. In various embodiments, the combination of feed rolls in the machine **400** may be different from what is shown in **FIG. 4**. For example, the configuration of feed rolls as shown in **FIG.4** may produce a board product with five layers (as will be discussed below with respect to **FIG. 5A****/B**) In order to produce the board product ***100*** of **FIG. 3A****/B,** only four fe ed rolls may be used; the feed rolls in such an embodiment would include first facing feed roll ***410**,* corrugated medium feed roll ***420,*** embossed medium feed roll ***430*** and second facing feed roll ***440.*** The remainder of the discussion with regard to **FIG. 4** focuses on this embodiment.

Prior to entering the combiner ***450*,** at least some of the paper from the feed rolls may be passed through a stage for forming the paper into a medium. As used herein and in the industry, a medium may refer to a paper product that has been formed into paper having flutes. Thus, the corrugated medium feed roll ***420*** may feed paper into first and second corrugating rolls ***421a*** and ***421b*** that are aligned with respect to each other. As the paper exits the corrugating stage (e.g., corrugating rolls ***421a*** and ***421b***), it becomes the corrugated medium ***120*** as discussed above with respect to **FIG. 1**. The corrugated medium ***120*** is then fed into the combiner ***450*** to be combined with other materials. Similarly, the embossed medium feed roll ***430*** may feed paper into first and second embossing rolls ***431a*** and ***431b*** that are aligned with respect to each other. As the paper exits the embossing stage {e.g., embossing rolls ***431a*** and ***431b***), it becomes the embossed medium ***130*** as discussed above with respect to **FIG. 2****.** The embossed medium ***130*** is then fed into the combiner ***450*** to be combined with other materials.

In the embodiment that produces the board product of **FIG. 3A****/B,** a first facing ***110**,* the corrugated medium ***120**,* the embossed medium ***130**,* and a second facing ***140*** are combined in the combiner ***450*** using various techniques such as adhesion, curing, wetting, drying, heating, and chemical treatment. The resultant board product ***100*** features at least one cross-corrugated medium ***120*** and at least one linearly-embossed medium ***130**.*

Other machine ***400*** embodiments may be configured to produce different board products with differing arrangements of paper, facing, and medium. For example, another facing feed roll ***445*** may be included to feed a third facing ***446*** to be disposed between the cross-corrugated medium ***120*** and the linearly-embossed medium ***130**.* Thus, five layers may be fed to the combiner ***450*** to produce a board product having five layers assembled together. Such a board product is discussed next with respect to **FIG. 5A****/B.**

**FIG. 5A** is an isometric cutaway view of a board product ***500*** having a corrugated medium ***120*** and an embossed medium ***130*** and having a facing **446** disposed between these mediums ***120*** and ***130*** according to an embodiment of the subject matter disclosed herein. In this embodiment, the board product ***500*** includes five layers: a first facing ***110,*** a corrugated medium ***120,*** a middle facing **446,** an embossed medium ***130,*** and a second facing ***140**.* As is shown, the first facing ***110*** may form a top-side outer wall (although the direction reference to alignment of the board product ***500*** is arbitrary) that is coupled to one side of the corrugated medium ***120**.* The coupling may be through an adhesive applied to the apex of each flute on the top-side of the corrugated medium ***120*** such that the facing ***110*** is coupled to the corrugated medium ***120*** where adhesive is applied. Likewise, a second facing **140** may form a bottom-side outer wall (again, the direction reference is arbitrary) that is coupled to one side of the embossed medium ***130**.* The coupling may be through an adhesive applied to the apex of each flute on the bottom-side of the embossed medium ***130*** such that the facing ***140*** is glued to the embossed medium ***140*** where adhesive is applied.

Further, the corrugated medium ***120*** and the embossed medium ***130*** may also be glued to a middle facing **446** using adhesive. In this manner, the corrugated medium ***120*** and the embossed medium ***130*** are affixed with respect to one another because of the adhesive holding each medium to the middle facing ***446***. When all five layers are assembled and affixed, the resultant board product ***500*** is stronger than conventional board product because the linearly-embossed medium ***130*** takes advantage of the superior MD value of the underlying paper product. As can also be seen in **FIG. 5B****,** the five layers, when assembled feature the embossed medium ***130*** having flutes that are perpendicular (or at least not congruent) with the flutes of the corrugated medium ***120**.* This results in additional board structure and strength because the flutes of the respective mediums are perpendicular with respect to each other (or at the least, not congruent).

In another aspect there may be provided a board product, comprising a first medium formed from a first paper having a machine direction and cross direction, the first medium having one or more flutes aligned with the machine direction of the first paper; and a second medium formed from a second paper having a machine direction and a cross direction, the second medium affixed with respect to the first medium and having one or more flutes aligned with the cross direction of the second paper.

The board product may comprise a facing adhered to the first medium and/or a facing adhered to the second medium.

The first medium may be adhered directly to the second medium.

A facing may be adhered to the first medium and adhered to the second medium such that the facing is affixed between the first medium and the second medium.

The first medium may further comprise flutes induced through embossing.

The first medium may further comprise flutes induced through scoring.

The second medium may further comprise flutes induced through corrugating.

The first medium further may comprise flutes having a size corresponding to an E-flute profile.

The second medium may further comprise flutes having a size corresponding to a C-flute profile.

The flutes in the first medium are preferably not congruent with the flutes in the second medium.

In a further aspect there may be provided a method comprising:
embossing a first paper in a machine direction, the embossing resulting in an embossed medium having flutes induced in the machine direction;
corrugating a second paper in a cross direction, the corrugating resulting in a corrugated medium having flutes induced in the cross direction; and
affixing the embossed medium with respect to the corrugated medium.

The method may further comprise adhering the embossed medium directly to the corrugated medium.

The method may further comprise adhering the embossed medium to a first side of a facing and adhering the corrugated medium to a second side of a facing.

The method may further comprise adhering a facing to the embossed medium such that the facing is disposed apart from the corrugated medium. The method may further comprise adhering a facing to the corrugated medium such that the facing is disposed apart from the embossed medium.

The embossed medium may comprise flutes having an E -flute profile and the corrugated medium may comprise flutes having a C-flute profile.

In a further aspect there may be provided a machine, comprising:
a first paper feed roll configured to feed paper to a corrugating stage;
a second paper feed roll configured to feed paper to an embossing stage;
at least one pair of corrugating rolls configured to cross corrugate the paper fed to the corrugating stage to produce a cross-corrugated medium;
at least one pair of embossing rolls configured to linearly emboss the paper fed to the embossing stage to produce a linearly-embossed medium;
a stage for combining the cross-corrugated medium with the linearly-embossed medium.

The machine may further comprise a third paper feed roll configured to feed a first facing to the stage for combining such that the first facing is adhered to one of the cross-corrugated medium and the linearly-embossed medium for combining a facing with the combination of the corrugated medium and the embossed medium; and
a fourth paper feed roll configured to feed a second facing to the stage for combining such that the second facing is adhered to the other of the cross-corrugated medium and the linearly-embossed medium. The machine may further comprising a third paper feed roll configured to feed a facing to the stage for combining such that the facing is adhered to the cross- corrugated medium and adhered to the linearly-embossed medium.

While the subject matter discussed herein is susceptible to various modifications and alternative constructions, certain illustrated embodiments thereof are shown in the drawings and have been described above in detail. It should be understood, however, that there is no intention to limit the claims to the specific forms disclosed, but on the contrary, the intention is to cover all modifications, alternative constructions, and equivalents falling within the scope of the claims.

## Claims

1. A method of making a board product with improved structure, the method comprising:
embossing a first paper in a machine direction, the first paper having underlying fibers aligned in the machine direction and the embossing resulting in an embossed medium having linearly-embossed flutes induced in the machine direction;
corrugating a second paper in a cross direction, the corrugating resulting in a corrugated medium having flutes induced in the cross direction;
feeding the embossed medium, the corrugated medium, a first side facing, and a second side facing toward a single combiner; and
combining the embossed medium, the corrugated medium, the first side facing, and the second side facing in the single combiner.

2. The method of claim 1, wherein the combining comprises adhering the first side facing to the embossed medium.

3. The method of claim 1, wherein the combining comprises adhering the second side facing to the corrugated medium.

4. The method of claim 1, wherein the combining comprises adhering the embossed medium directly to the corrugated medium.

5. The method of claim 1, wherein the linearly-embossed flutes have an E-flute profile.

6. The method of claim 1, wherein the flutes of the corrugated medium have a C-flute profile.

7. The method of claim 1, wherein the linearly-embossed embossed flutes and the flutes of the corrugated medium are not congruent.

8. The method of claim 1, further comprising feeding a third facing toward the combiner and combining the third facing with the embossed medium, the corrugated medium, the first side facing, and the second side facing.

9. The method of claim 8, wherein the combining comprises adhering the third facing to the embossed medium and the corrugated medium such that the third facing is affixed between the embossed medium and the corrugated medium.

10. A machine configured to produce a board product, the machine comprising:
an embossed medium feed roll configured to feed an embossed medium toward a combiner;
a corrugated medium feed roll configured to feed a corrugated medium toward the combiner;
a first facing feed roll configured to feed a first facing toward the combiner; and
a second facing feed roll configured to feed a second facing toward the combiner;
wherein the combiner is configured to combine, in the combiner, the embossed medium, the corrugated medium, the first facing, and the second facing to form a board product.

11. The machine of claim 10, further comprising a pair of embossing rolls wherein said pair of embossing rolls are used to form the embossed medium by embossing a first paper in a machine direction resulting in the embossed medium having linearly-embossed flutes induced in the machine direction, the first paper having underlying fibers aligned in the machine direction.

12. The machine of claim 11, further comprising a pair of corrugating rolls wherein said pair of corrugating rolls are used to form the corrugated medium by corrugating a second paper in a cross direction resulting in the corrugated medium having flutes induced in the cross direction.

13. The machine of claim 12, wherein the linearly-embossed flutes and the flutes of the corrugated medium are not congruent.

14. The machine of claim 10, wherein the combiner is configured to adhere the first facing to the embossed medium and to adhere the second facing to the corrugated medium.

15. The machine of claim 10, further comprising a middle facing feed roll configured to feed a middle facing toward the combiner, and wherein the combiner is further configured to combine, in the combiner, the middle facing with the embossed medium, the corrugated medium, the first facing, and the second facing to form the board product.
